# EUROPÄISCHE PATENTANMELDUNG

(11) **EP 0 862 114 A1**
(43) Veröffentlichungstag der Anmeldung: **02.09.1998**
(21) Anmeldenummer: 98100786.7
(22) Anmeldetag: 19.01.1998
(51) Int. Cl.: G06F 11/00

(54) **Verfahren zur Prüfung eines objekt-orientierten Systems**

(30) Priorität: 27.02.1997 CH 470/97
(71) Anmelder: Siemens Schweiz AG (Siemens Suisse SA) (Siemens Svizzera SA) Siemens Switzerland Ltd), 8047 Zürich (CH)
(72) Erfinder: Deriaz, Pierre, 1023 Crissier (CH); De Pascale, Pierre, 1196 Gland (CH)

(57) **Zusammenfassung**

Das Verfahren dient zum Testen eines objektorientierten Systems (OOS), das aus wenigstens zwei Instanzen (A, B, C, D; As, Bd, Cs) besteht, von denen wenigstens eine durch Zuführung von Nachrichten (sig1, sig4; start, sig2) sowie Überprüfung dazu korrespondierender Nachrichten (sig2, sig3, sig5; sig1, sig3), die von dieser Instanz abgegeben werden, mittels einer Testumgebung (TE) getestet wird, wobei die Nachrichtenübertragung von der zu testenden Instanz (B, Bd) zur Testumgebung (TE) durch einen Prozessmanager (PMAN) gesteuert wird. Erfindungsgemäss wird dazu im objektorientierten System (OOS) eine Schnittstelleninstanz (stub) vorgesehen, der, gesteuert durch den Prozessmanager (PMAN), Nachrichten von der zu testenden Instanz (B, Bd) zugeführt werden. Die Schnittstelleninstanz (stub) leitet diese Nachrichten an die Testumgebung (TE) weiter, welche feststellt, ob die eintreffenden Nachrichten den vorgesehenen Werten entsprechen. Aufgrund der Verwendung einer Schnittstelleninstanz (stub) innerhalb des objektorientierten Systems (OOS), der die zu prüfenden Nachrichten jeweils zugeführt werden, ergibt sich eine signifikante Vereinfachung des Testablaufs, welcher in einem Testscript (TS) festgelegt wird.

## Beschreibung

Die vorliegende Erfindung betrifft ein Verfahren nach dem Oberbegriff des Patentanspruchs 1.

In der Softwareentwicklung werden in den letzten Jahren vermehrt objektorientierte Technologien verwendet, die in bezug auf Wiederverwendbarkeit, Anpassbarkeit, Zuverlässigkeit von Softwaresystemen deutliche Verbesserungen erwarten lassen (siehe A. Lüscher, A. Straubinger, Objektorientierte Technologien, vdf Hochschulverlag der ETH Zürich, 1996, Seite 16). Gemäss Brad J. Cox, Object Oriented Programming (An Evolutionary Approach), Addison Wesley Verlag 1987 basieren die Vorteile objektorientierter Programmierung insbesondere auf den zur Anwendung kommenden Prinzipien der Kapselung und der Vererbung für die verwendeten Objekte bzw. für die Instanzen der für ein System definierten Klassen.

Um die Funktionsfähigkeit von einzelnen oder mehreren miteinander verbundenen Softwaremodulen bzw. Instanzen überprüfen zu können, werden Testumgebungen verwendet, welche die fehlenden, für einen vollständigen Testlauf aber unabdingbaren Teile eines Systems nachbilden. Bei der Realisierung von komplexen Systemen - wie beispielsweise eines Q3- Adapters für ein Telekommunikationssverwaltungsnetzwerk (TMN - Telecommunication Management Network) in einer Fernmeldeanlage (siehe CCITT- Empfehlung M.30 bzw. M.3010, CCITT Blue Book, Volume IV - Fascicle IV.1, IXth Plenary Assembly, Geneva 1989) - ist eine systematische Überprüfung von Systemteilen vor einem Integrationstest zur frühzeitigen Elimination von Fehlern von grosser Bedeutung. Wird ein System erst nach der Gesamtintegration aller Systemteile getestet, ist ein Lokalisieren von Fehlern meist mit grossen Schwierigkeiten verbunden, da die Ursachen sowohl in einem Systemteil als auch in einer Inkompatibilität von zwei oder mehreren verknüpften Systemteilen liegen können. Es empfiehlt sich daher ein schrittweises Inbetriebnehmen und Testen von Systemteilen bevor eine Integration des Gesamtsystems vorgenommen wird.

Die Durchführung von Tests an aus solchen Teilsystemen bestehenden Prüflingen ist jedoch aufwendig, da für jedes zu testende Teilsystem eine separate Testumgebung erstellt werden muss. Dazu gehört auch die Eingabe sämtlicher zwischen der Testumgebung und dem Prüfling mittels Meldungen zu übertragenden Daten, die demnach vor dem Testlauf vorbereitet werden müssen.

Aus der EP 0 679 004 A2 ist ein Verfahren zum Testen von Klassen eines objektorientierten Systems bekannt, bei dem z.B. eine Klasse A (Prüfling) mit Hilfe einer zu einer Testumgebung gehörenden Testverwaltungseinheit, die mindestens eine weitere Klasse B ersetzt, getestet wird. Meldungen von Klasse A (Prüfling) an die ersetzte Klasse B werden während dem Test durch eine Prozessverwaltungseinheit an die Testverwaltungseinheit umgeleitet (und umgekehrt). Indem für jeden Test eine Testverwaltungseinheit geschaffen und in eine gesonderte Testumgebung eingebunden werden muss, ergibt sich für die Durchführung dieses Testverfahrens ein verhältnismässig grosser Aufwand. Ferner sind bei diesem Testverfahren Schnittstellen und Abläufe in SDL++ (Specification und Description Language) zu beschreiben und anschliessend, nach Umwandlung in eine weitere Programmiersprache in maschninenlesbare Form zu übersetzen.

Der vorliegenden Erfindung liegt daher die Aufgabe zugrunde, ein Verfahren zur Prüfung eines objektorientierten Systems anzugeben, das mit geringem Aufwand durchführbar ist und sich den auftretenden Testsituationen flexibel anpassen lässt.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Bei dem aus der EP 0 679 004 A2 bekannten Verfahren werden Schnittstellen von zu testenden Klassen eines objektorientierten Systems mit Hilfe von meist mehreren Testumgebungen bzw. Testverwaltungseinheiten nachgebildet, die selber Klassen darstellen, jedoch lediglich die Schnittstellen zu den zu testenden Klassen ersetzen.

Erfindungsgemäss muss hingegen nicht mehr eine Vielzahl von Testumgebungen bzw. Testverwaltungseinheiten geschaffen werden, welche selber Klassen darstellen. Die Kommunikation zwischen der zu prüfenden Klasse und der Testeinheit erfolgt über eine einzige dafür geschaffene Instanz (sogenannte Schnittstelleninstanz), die in das objektorientierte System eingebunden ist. Auch bei Änderungen der Testabläufe werden die vom Prüfling abgebenen Nachrichten immer über die Schnittstelleninstanz zu einer einzigen Testumgebung transferiert, wobei die mit dem Prüfling im Normalbetrieb kommunizierenden Instanzen nicht ersetzt, sondern überbrückt bzw. umlaufen werden. Innerhalb der Testumgebung wird ein Testscript abgearbeitet, das normalerweise mehrere Testabläufe enthält. Das kompilierte Testprogramm wird (als "shared object") standardmässig mit dem objektorientierten System verbunden, so dass letzteres nicht mehr neu kompiliert werden muss. Zur Testvorbereitung sind daher nur das Testprogramm zu erstellen und zu kompilieren sowie die zu überbrückenden Instanzen (bypassed instances) festzulegen. Ferner ist im objektorientierten System eine Schnittstellenklasse oder lediglich eine Schnittstelleninstanz vorzusehen, wodurch ein wesentlicher Teil des Testaufbaus für alle möglichen Testabläufe durch das objektorientierten System selbst vorgegeben wird.

Die Erfindung wird nachfolgend anhand von Zeichnungen beispielsweise näher erläutert. Dabei zeigt
Fig. 1 ein zu testendes objektorientiertes System,
Fig. 2 das objektorientierte System gemäss Fig. 1 gekoppelt mit einer Testumgebung,
Fig. 3 ein weiteres zu testendes objektorientiertes System,
Fig. 4 das objektorientierte System gemäss Fig. 3 gekoppelt mit einer Testumgebung und
Fig. 5 ein objektorientiertes System in Verbindung mit der gesamten Testumgebung.

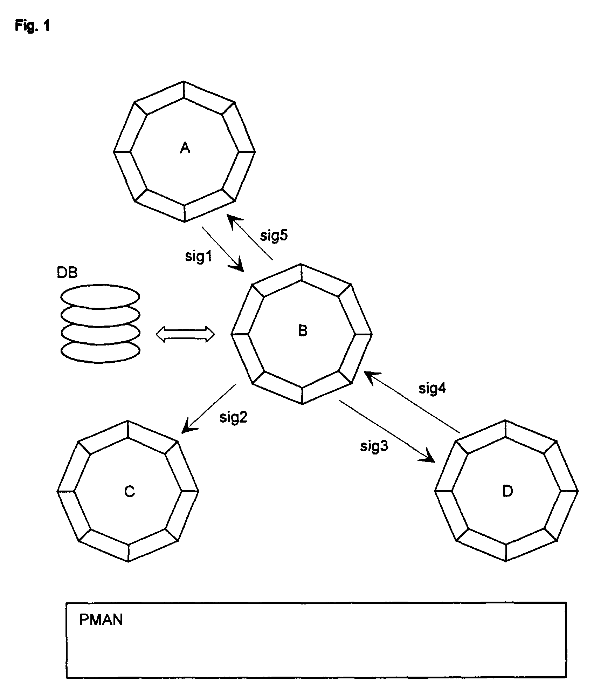

Fig. 1 zeigt ein objektorientiertes System mit vier miteinander kommunizierenden Instanzen A, B, C und D, die, z.B. wie in SIGRAPH-SET-SDL-ED (WS30), Ein Werkzeug zum Entwurf von SDL-Zustandsdiagrammen, Benutzeranleitung, Ausgabe November 1990, Siemens Nixdorf Informationssysteme AG, Seiten 37 - 102 beschrieben, eine Fertigungszelle mit einem Leitrechner, einer Steuerung, einer Robotersimulation und einer Zeitsimulation darstellen können.

Eine Besonderheit der zur Erstellung des objektorientierten Systems verwendeten Entwicklungsumgebung ist die Verwendung eines Prozessmanagers PMAN, der zur Steuerung des Nachrichtenverkehrs (siehe die Signale sig1, ..., sig5) zwischen den Instanzen A, B, C und D vorgesehen ist. Eine dazu geeignete Entwicklungsumgebung ist z.B. SDL++ (siehe z.B. SDL++ - A Toolset for the Object-oriented Development of C++ Software, G. Gries, SDL '93 - Using Objects, Proceedings of the Sixth SDL Forum, Darmstadt, Germany, 11. - 15. Oktober 1993, Elsevier Science Publishers B.V., 1993; siehe auch EP 0 679 004 A2). Um den Nachrichtenaustausch zwischen zwei erfindungsgemäss benötigten Prozessen proc1 und proc2 zu ermöglichen, ist das objektorientierte System vorzugsweise asynchron steuerbar.

Zwischen den Instanzen A und B bzw. B und D werden die Nachrichten sig1 und sig5 bzw. sig3 und sig4 ausgetauscht. Von der Instanz B wird ferner die Nachricht sig2 an die Instanz C abgegeben. Weiterhin kann die Instanz B Daten mit dem Datenbanksystem DB austauschen.

Zum Testen einer Instanz, z.B. der Instanz B von Fig. 1, wurde gemäss der EP 0 679 004 A2 bisher der Nachrichtenaustausch mit den benachbarten Instanzen kontrolliert. Für jede benachbarte Instanz A, C oder D musste dabei eine separate Testumgebung bzw. Testverwaltungseinheit nachgebildet werden, die selber eine Instanz darstellte.

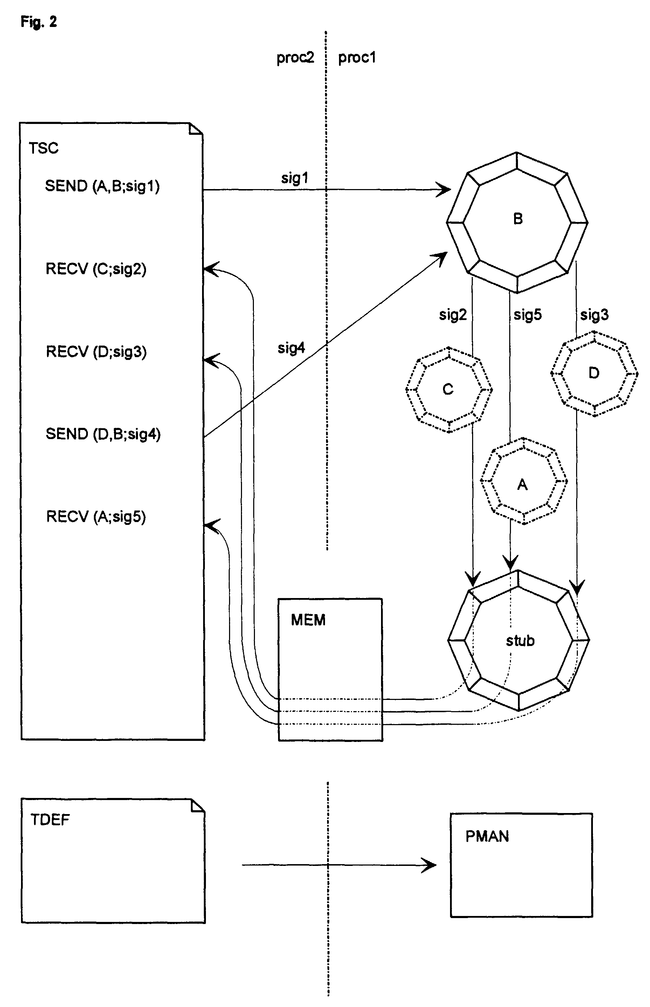

Das erfindungsgemässe Testverfahren, das nachstehend anhand von Fig. 2 beschrieben wird, verwendet anstelle von mehreren Testinstanzen, welche im vorliegenden Fall für die Instanz A, die Instanz C und die Instanz D erstellt werden müssten, eine einzige Schnittstelleninstanz stub, welche die Nachrichten sig2, sig3 und sig5 von den zu testenden Instanzen, im vorliegenden Fall von der Testinstanz B, empfängt und aber einen Pufferspeicher MEM an eine Testumgebung TE übergibt, die in einem zweiten Prozess proc2 betrieben wird. Die Instanzen A, B, C, D sowie die Schnittstelleninstanz stub sind demgegenüber in einen ersten Prozess proc1 eingebunden.

Die Bezeichnung Schnittstelleninstanz wurde für die Instanz stub deshalb gewählt, weil sie die Schnittstelle zwischen dem objektorientierten System OOS (z.B. der SDL++-Welt) und der Testumgebung TE bildet. Durch das objektorientierte System OOS wird eine Operation der Testungebung TE so wahrgenommen, als würde sie innerhalb der Schnittstelleninstanz stub ausgeführt.

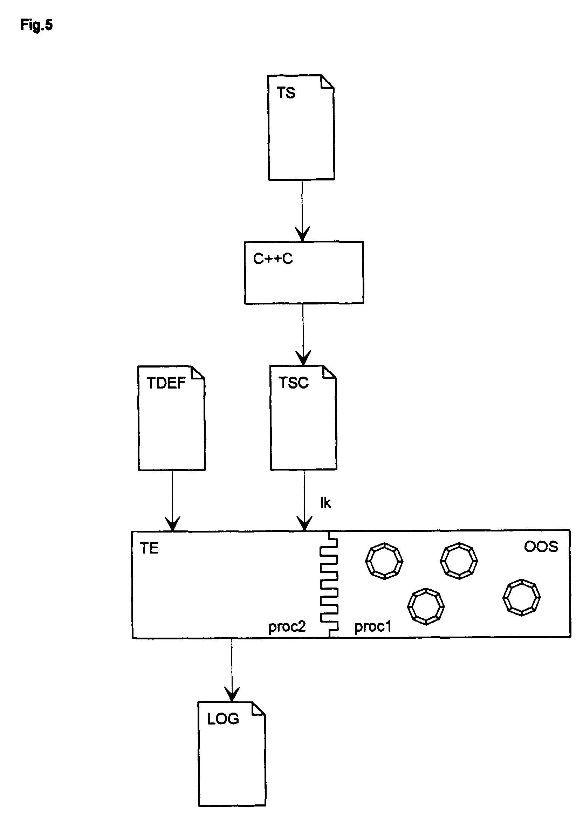

Die beiden Prozesse proc2 und proc1, die wechselseitig, unter gegenseitigem Ausschluss betrieben werden, haben vorzugsweise Zugriff zu einem gemeinsam verwendeten Speicherbereich im Pufferspeicher MEM, über den sie Nachrichten, Kommandos, etc. untereinander austauschen. Dem Prozessmanager PMAN obliegt die Aufgabe, die Nachrichten sig2, sig3 und sig5 von der Testinstanz B zu den Instanzen A, C, D zur Schnittstelleninstanz stub umzuleiten. Die zur Umleitung der Nachrichtenkanäle notwendige Information wird dem Prozessmanager PMAN über eine Testdefinitionsliste TDEF (siehe Fig. 5) mitgeteilt. Der Testablauf wird in einem vorzugsweise in C++ geschriebenen Testscript TS (siehe Fig. 5) festgelegt, welches nach Verarbeitung in einem Kompiler C++C (TSC bezeichnet das kompilierte Testscript) als eingebundenes Objekt (shared object) Teil der Testumgebung TE ist, die mit dem objektorientierten System OOS verbunden ist (siehe Verbindungslinie bzw. Link lk). Das Kompilieren und Einbinden des Testscripts TS erfolgt während dem Testablauf, so dass das objektorientierte System OOS bei der Änderung des laufenden Testverfahrens nicht neu kompiliert werden muss. Die Änderung des Testverfahrens kann mit geringem Aufwand durchgeführt werden, indem z.B. im Quellprogramm einige Programmzeilen geändert werden. Durch das erfindungsgemässe Verfahren wird daher die zur Prüfung verschiedener Instanzen oder Klassen benötigte Zeit im Vergleich zu bekannten Verfahren deutlich zu reduzieren.

Der Ablauf des erfindungsgemässen Verfahrens wird anhand des Tests der in Fig. 1 und Fig. 2 gezeigten Instanz B illustriert. Aus Fig. 1 ist der Nachrichtenverkehr zwischen der Instanz B und den benachbarten Instanzen A, C und D ersichtlich. Als Antwort auf ein Kommando (sig1) von der Instanz A (z.B. eine Leitstelle) gibt die Instanz B (z.B. eine Steuerung) einen Steuerbefehl (sig3) an die Instanz D (z.B. ein Roboter) und ein Kommando (sig2) an die Instanz C (z.B. eine Anzeigevorrichtung) ab. Nach Erhalt einer Bestätigungsmeldung (sig4) von Instanz D gibt Instanz B eine Rückmeldung (sig5) an die Instanz A ab.

Vor Testbeginn sind die zu überbrückenden Instanzen A, C und D dem Prozessmanager PMAN bekannt zu geben, der die für die benachbarten Instanzen A, C und D bestimmten Nachrichten von der Instanz B daraufhin zur Schnittstelleninstanz stub umleitet.

In einem ersten Testzylkus soll daher geprüft werden, ob Instanz B nach Erhalt von Nachricht sig4 die Nachrichten sig2 und sig3 absetzt. Durch den zweiten Prozess proc2 wird dazu das im Testscript TSC stehende Kommando SEND (A, B; sig1) ausgeführt, durch das die Nachricht sig1 an die Instanz B abgegeben wird. Weiterhin werden die Kommandos RECV (C; sig2) und RECV (D; sig3) ausgeführt, durch die der zweite Prozess proc2 in einen Wartezustand versetzt wird, währenddem der Empfang der Nachrichten sig2 und sig3 erwartet wird. Die Dauer des Wartezustandes wird dabei vorzugsweise limitiert, so dass nach Ablauf einer festgelegten Zeitspanne, während der die Nachrichten sig2 und sig3 hätten eintreffen müssen, ein Fehlermeldung generiert wird. Nachdem der zweite Prozess proc2 in einen Wartezustand versetzt wurde, wird der erste Prozess proc1 aktiviert, wonach, ausgelöst durch die Nachricht sig1, die Nachrichten sig2 und sig3 von der Instanz B zur Schnittstelleninstanz stub und weiter zum Pufferspeicher MEM übertragen werden. Nach Abgabe der Nachrichten sig2 und sig3 wird der erste Prozess proc1 angehalten und der zweite Prozess proc2 wieder aktiviert. Nun wird die Nachricht sig4 (SEND (D, B; sig4) an die Instanz B abgegeben und die Nachricht sig5 (RECV (A; sig5)) als Antwort erwartet. Anschliessend wird der zweite Prozess proc2 wieder angehalten und der erste Prozess proc1 aktiviert, wonach die Nachricht sig5 von der Instanz B über die Schnittstelleninstanz stub zum Pufferspeicher MEM übertragen wird.

Nach Abschluss des Testverfahrens wird durch die Testeinheit TE ein Testprotokoll LOG ausgegeben.

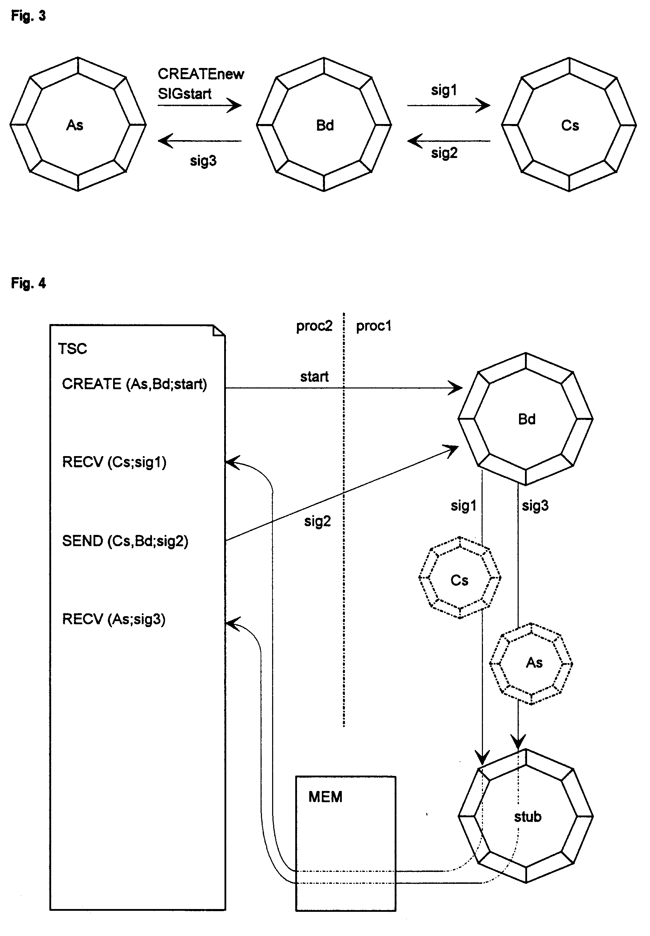

Das erfindungsgemässe Verfahren erlaubt die Prüfung statischer oder dynamischer Instanzen. Letztere werden während dem Programmablauf durch weitere Instanzen (bedarfsweise) erzeugt und wieder gelöscht. In Fig. 3 sind zwei statische Instanzen As und Cs sowie eine durch die Instanz As mit den Kommandos CREATEnew und SIGstart erzeugte und gestartete dynamische Instanz Bd gezeigt, welche eine Nachricht sig1 an die Instanz Cs abgibt, von dieser Instanz Cs die Nachricht sig2 empfängt und an die Instanz As anschliessend die Nachricht sig3 absetzt.

Aus Fig. 4 ist der Ablauf des erfindungsgemässen Verfahrens beim Test der dynamischen Instanz Bd ersichtlich.

Vor Testbeginn sind wiederum die zu überbrückenden Instanzen As und Cs dem Prozessmanager PMAN bekannt zu geben, der die für die benachbarten Instanzen As und Cs bestimmten Nachrichten von der Instanz Bd daraufhin zur Schnittstelleninstanz stub umleitet.

In einem ersten Testzyklus soll geprüft werden, ob die dynamische Instanz Bd korrekt erzeugt und gestartet wird. Durch den zweiten Prozess proc2 wird dazu das im Testscript TSC stehende Kommando CREATE (As, Bd; start) ausgeführt (die Syntax der Sprache verlangt die Angabe des Kommandos "CREATE", die Angabe der auslösenden Instanz "As", die Angabe der Zielinstanz "Bd" sowie Angabe der durchzuführenden Operation "start" oder eines Arguments). Weiterhin wird das Kommando RECV (Cs; sig1) ausgeführt, durch das der zweite Prozess proc2 in einen Wartezustand versetzt wird, während dem der Empfang der Nachricht sig1 erwartet wird. Nachdem der zweite Prozess proc2 in einen Wartezustand versetzt wurde, wird der erste Prozess proc1 aktiviert, wonach, ausgelöst durch die Nachricht start, die Nachricht sig1 von der Instanz Bd zur Schnittstelleninstanz stub und weiter zum Pufferspeicher MEM übertragen werden. Nach Eintreffen der Nachricht sig1 wird der erste Prozess proc1 angehalten und der zweite wieder aktiviert. Nun wird die Nachricht sig2 (SEND (Cs, Bd; sig2) an die Instanz Bd abgegeben und die Nachricht sig3 (RECV (As; sig3) als Antwort erwartet. Anschliessend wird der zweite Prozess proc2 wieder angehalten und der erste Prozess proc1 aktiviert, wonach die Nachricht sig3 von der Instanz Bd über die Schnittstelleninstanz stub zum Pufferspeicher MEM übertragen wird.

Die Schnittstelleninstanz stub wird normalerweise durch Vererbung aus einer Standard-Schnittstellenklasse des Prozessmanagers PMAN gebildet. Vorzugsweise übernimmt die erzeugte Schnittstelleninstanz stub die Aufgabe, die in der Testdefinitionsliste TDEF vorgesehenen Nachrichtenwege an den Prozessmanager PMAN zu melden. Die Schnittstelleninstanz stub, die in das objektorientierte System OOS eingebunden ist, welches im ersten Prozess proc1 betrieben wird, ist vorzugsweise auch für die Initialisierung des zweiten Prozesses proc2 zuständig, innerhalb dem das kompilierte Testscript TSC abläuft. Weiterhin kann durch die Schnittstelleninstanz stub jeweils auch das Anhalten des ersten Prozesses proc1 und das Starten des zweiten Prozesses proc2, die unter gegenseitigem Ausschluss ablaufen, bewirkt werden.

Das eingebundene kompilierte Testscript TSC, die zu übergebende Testdefinitionsliste TDEF sowie u.a. für die Auswertung der empfangenen Nachrichten, für die Ausgabe der Testprotokolle LOG und die Steuerung des Datenverkehrs über den gemeinsamen Speicherbereich (Pufferspeicher MEM) vorgesehenen Routinen, welche dem Fachmann bekannt sind, bilden die Testumgebung TE.

Aus Fig. 5 ist ersichtlich, dass vor Testbeginn das Testscript TS zu schreiben und zu kompilieren ist. Ferner sind in der Testdefinitionsliste TDEF die zu überbrückenden Instanzen festzulegen. Bei der Initialisierung des Systems werden innerhalb dem ersten Prozess proc1 alle Klassen des objektorientierten Systems erzeugt. Nach Erzeugung der Schnittstellenklasse bzw. Schnittstelleninstanz stub wird der zweite Prozess proc2 erzeugt und gestartet. Vorzugsweise werden zudem alle Startsignale, die den überbrückten Instanzen während einem System-Start-up zugesandt werden, der Testumgebung TE übermittelt und auf dem Bildschirm der Testvorrichtung angezeigt und/oder im Testprotokoll LOG ausgedruckt. Anschliessend wird der erste Prozess proc1 angehalten, bis der zweite Prozess proc2 vorzugsweise durch Abgabe einer RECV (Receive) - Funktion anzeigt, dass er auf den Empfang von Nachrichten vom ersten Prozess proc1 wartet. Nach Durchführung eines Tests prüft die Testumgebung TE ob weitere abzuarbeitende Testabläufe (test-cases) im Testscript TS vorhanden sind, die in demselben Prozess proc2 ausgeführt werden können.

## Patentansprüche

1. Verfahren zum Testen eines objektorientierten Systems (OOS), das aus wenigstens zwei Instanzen (A, B, C, D; As, Bd, Cs) besteht, von denen wenigstens eine durch Zuführung von Nachrichten (sig1, sig4; start, sig2) sowie Überprüfung dazu korrespondierender Antworten bzw. Nachrichten (sig2, sig3, sig5; sig1, sig3), die von dieser Instanz abgegeben werden, mittels einer Testumgebung (TE) getestet wird, wobei die Nachrichtenübertragung von der zu testenden Instanz (B, Bd) zur Testumgebung (TE) durch einen Prozessmanager (PMAN) gesteuert wird, **dadurch gekennzeichnet**, dass im objektorientierten System (OOS) eine Schnittstelleninstanz (stub) vorgesehen wird, der, gesteuert durch den Prozessmanager (PMAN), Nachrichten von der zu testenden Instanz (B, Bd) zugeführt werden und dass diese Nachrichten von der Schnittstelleninstanz (stub) an die Testumgebung (TE) abgegeben werden, welche feststellt, ob die eintreffenden Nachrichten den vorgesehenen Werten entsprechen.

2. Verfahren nach Anspruch 1, **dadurch gekennzeichnet**, dass zwei Prozesse (proc2, proc1) vorgesehen sind, die wechselseitig unter gegenseitigem Ausschluss betrieben werden, dass die Testumgebung (TE) im zweiten Prozess (proc2) und das objektorientierte System (OOS) im ersten Prozess (proc1) wechselseitig betrieben werden.

3. Verfahren nach Anspruch 2, **dadurch gekennzeichnet**, dass die Prozesse (proc2, proc1) auf einen gemeinsamen Speicherbereich (Pufferspeicher MEM) zugreifen können, wodurch u.a. Daten von der Schnittstelleninstanz (stub) zur Testumgebung (TE) übertragbar sind.

4. Verfahren nach Anspruch 1, 2 oder 3, **dadurch gekennzeichnet**, dass der Testablauf in C++ oder einer weiteren entsprechenden Sprache in einem Testscript (TS) geschrieben wird, wonach das Testscript (TS) kompiliert und innerhalb der Testumgebung (TE) an das objektorientierte System (OOS) angekoppelt wird.

5. Verfahren nach Anspruch 1, 2, 3 oder 4, **dadurch gekennzeichne**t, dass in einer Testdefinitionsliste (TDEF) festgelegt wird, welche Instanzen (A, C, D; As, Cs) des objektorientierten Systems (OOS) in bezug auf den Empfang der von der zu testenden Instanz (B, Bd) abgegebenen Nachrichten durch die Schnittstelleninstanz (stub) zu überbrücken sind.

6. Verfahren nach einem der Ansprüche 1 - 5, **dadurch gekennzeichnet**, dass nach Abgabe von Nachrichten (sig1; start), die durch Ausführung entsprechender im Testscript (TS) festgelegter Befehle (SEND, CREATE) ausgelöst werden, Befehle (RECV) ausgeführt werden, durch die der zweite Prozess (proc2) in einen Zustand versetzt wird, in dem vorzugsweise innerhalb einer limitierten Zeitspanne auf den Empfang von Nachrichten von der zu testenden Instanz (B, Bd) gewartet wird.

7. Verfahren nach Anspruch 6, **dadurch gekennzeichnet**, dass nach Abgabe von Nachrichten (start), die durch Ausführung entsprechender im Testscript (TS) festgelegter Befehle (CREATE) ausgelöst werden, dynamische Instanzen (Bd) erzeugt werden, die zu testen sind oder die zur Kommunikation mit der zu testenden Instanz (B; Bd) vorgesehen sind.

8. Verfahren nach einem der Ansprüche 1 - 7, **dadurch gekennzeichnet**, dass die Schnittstelleninstanz (stub) Methoden aufweist, durch deren Ausführung der erste Prozess (proc1) nach Weitergabe der von der zu testenden Instanz (B; Bd) erhaltenen Nachrichten (sig2, sig3, sig5; sig1, sig3) an den Pufferspeicher (MEM) angehalten wird.

9. Verfahren nach einem der Ansprüche 1 - 8, **dadurch gekennzeichnet**, dass durch die Testumgebung (TE) nach Abschluss des Tests ein Protokoll (LOG) ausgegeben wird.

10. Verfahren nach einem der Ansprüche 1 - 9, **dadurch gekennzeichnet**, dass das objektorientierte System (OOS), das vorzugsweise asynchron steuerbar ist, in SDL, SDL(+...) oder einer weiteren objektorientierten Sprache geschrieben ist, welche zur Einbindung einer Schnittstelleninstanz (stub) geeignet ist.
